# EUROPEAN PATENT SPECIFICATION

(11) **EP 0 488 807 B1**
(45) Date of publication and mention of the grant of the patent: **20.05.1998**
(21) Application number: 91311149.8
(22) Date of filing: 29.11.1991
(51) Int. Cl.: G02F 1/1333, B29C 47/00

(54) **Plastic film liquid crystal display device and its manufacturing method**
Flüssigkristallanzeigevorrichtung mit Kunststoffilmen und Verfahren zu ihrer Herstellung
Dispositif d'affichage en film plastique et sa méthode de fabrication

(30) Priority: 29.11.1990 JP 334865/90
(43) Date of publication of application: 03.06.1992
(73) Proprietor: SHARP KABUSHIKI KAISHA, Osaka-shi, Osaka-fu 545 (JP)
(72) Inventor: Fukuchi, Shunsei, Nara-shi, Nara-ken (JP); Misono, Kenji, Nara-shi, Nara-ken (JP); Iwamoto, Makoto, Yamatokoriyama-shi, Nara-ken (JP); Isohata, Kyouhei, Nara-shi, Nara-ken (JP)
(74) Representative: Brown, Kenneth Richard

(56) References cited:
- EP-A- 0 260 626
- EP-A- 0 351 886
- DE-A- 3 811 410
- US-A- 4 523 812
- US-A- 4 643 531

## Description

### BACKGROUND OF THE INVENTION

### Field of the Invention

The present invention relates to a plastic film liquid crystal display device and a manufacturing method of the same, being preferably used as the display for electronic pocket diary, personal computer, word processor or the like being demanded to be lighter in weight and thinner in thickness.

### Description of the Prior Art

In the conventional liquid crystal display device, a glass substrate was used as its substrate. In the manufacturing process of the liquid crystal display device, the treating temperature reaches 300 to 500°C in a certain step, and the glass substrate is suited as the material withstanding such temperature.

Recently, as the manufacturing process and material development are advanced, it is possible to manufacture by lowering the treating temperature to a certain extent, and therefore a thin plastic film substrate which is lighter and thinner than the glass substrate has come to be used. For example, such materials are polyether sulfone (hereinafter PES) film substrate without optical anisotropy, and uniaxially drawn polyethylene terephthalate (PET) film substrate with optical anisotropy.

The plastic film substrate is required to satisfy the necessary items such as freedom from optical anisotropy or its consideration, heat resistance, solvent resistance, gas barrier performance, surface flatness, dimensional stability and transparency. The above PES substrate and uniaxially drawn PET film substrate satisfy these requirements considerably.

However, the PES film substrate involves the following disadvantages.
1. Since the gas permeability of oxygen or steam is large, it is necessary to be provided with a gas barrier layer. Also required is a hard coat layer for protecting this gas barrier.
2. Stable film formation is performed by extrusion forming, and the film thickness by this process is 0.1 mm, and the film is not tenacious and it is hard to obtain flatness. The pencil hardness is about HB, which is soft, leading to difficulties in handling. Therefore it is unsuitable for use as the substrate of a liquid crystal display device of supertwisted nematic type. Or when the layer thickness is increased, thickness unevenness becomes obvious or streaks are formed.
3. Since the maximum heat resistance is 150°C, low temperature baking of liquid crystal display component material is needed. Due to such restrictions by heat resistance, the indium tin oxide (ITO) transparent conductive film is not so hard as the high temperature baked ITO transparent conductive film disposed on the glass substrate. Therefore, disconnections occur often, and the conforming piece rate is lowered.
4. The price is high, and the dimensional stability is poor.

On the other hand, the uniaxially drawn PET substrate has the following demerits.
1) A gas barrier layer is also necessary because the gas permeability of oxygen and steam is also present slightly. Therefore, the hard coat layer for protecting the gas barrier layer is required.
2) Being manufactured by the same extrusion forming process as the PES film substrate, the film thickness for stable supply is 0.1 mm, and the film itself is not tenacious and the flatness is poor. Hence, it is unsuitable for use as the substrate for supertwisted nematic liquid crystal display element where a high flatness is required.
3. The maxiumum heat resistance is 130°C, and low temperature baking is necessary for the liquid crystal display constituent material which actually requires baking at about 150°C. Because of such restrictions of heat resistance, the ITO transparent conductive film is not so hard as the ITO transparent conductive film on the glass substrate. Accordingly, disconnections occur often, and the confirming piece rate is lowered.
4. Stability of the optical axis is poor, and curling is caused by heat in the optical axial direction.
5. Dimensional stability is poor.

DE-A-3811410 discloses a plastic film liquid crystal display device having a liquid crystal layer disposed between a pair of plastic film substrates, the substrates being made of transparent thermosetting diethylene glycol bisallyl carbonate resin. The maximum working temperature is 100°C in normal use and 150°C for short period usage. As mentioned earlier, hard ITO transparent conductive films cannot be obtained at these temperatures.

### SUMMARY OF THE INVENTION

It is hence a primary aim of the invention to provide a liquid crystal display element using a plastic film substrate capable of alleviating the above technical problems.

To this end, the invention provides a plastic film liquid crystal display device having a liquid crystal layer interspaced between a pair of plastic film substrate, characterised in that
the substrates are composed of transparent thermosetting allyl diglycol carbonate resin and have a maximum heat resistance of about 180°C.

In another aspect, the invention provides a method of manufacturing the plastic film liquid crystal display device.

According to the invention, as the material of the plastic film substrate, transparent thermosetting allyl diglycol carbonate (ADC) resin is used. By using the ADC resin, while maintaining the solvent resistance, dimensional stability and gas barrier performance equivalent to those of the PET film substrate with gas barrier layer, a plastic film substrate having a heat resistance of 180°C at maximum will be obtained.

When fabricated by forming, the substrate may be manufactured in a thickness of 0.2 mm or more, and by making the forming die of polished glass, the surface of the ADC substrate may be as precise as the polished glass.

Thus, since the ADC resin is used as the substrate material in the invention, the following effects are brought about.
1. By fabricating the substrate by forming, a substrate thickness of 0.2 mm or more is obtained. Accordingly, the substrate is tenacious and flat. Furthermore, by forming by means of polished glass die, the surface precision equivalent to polished glass is obtained, which makes it possible to present a plastic film liquid crystal display element of supertwisted nematic mode.
2. Since the substrate thickness of 0.2 mm or more is obtained and the material is hard, it can be handled in the same processing as of conventional glass substrate, and it can be put in the conventional manufacturing line. Besides, the matrix SiOx film by evaporation can be introduced, and the same material as employed in a glass substrate liquid crystal display device may be used for the seal and heat seal connection material.
3. Because the material is used in plastic lens technology, its peripheral technology of hard coat technology can be introduced, and surface protection such as measures against injury may be also possible. Optically, being free of anistropy, the permeability is high, and a bright liquid crystal display device can be presented.
4. Having a high heat resistance of 180°C at maximum for plastics, the margin of choice is broadened for liquid crystal display device constituent materials such as orientation film and seal requiring heat treatment.

### BRIEF DESCRIPTION OF THE DRAWINGS

Other and further objects, features, and advantages of the invention will be more explicit from the following detailed description taken with reference to the drawings wherein:

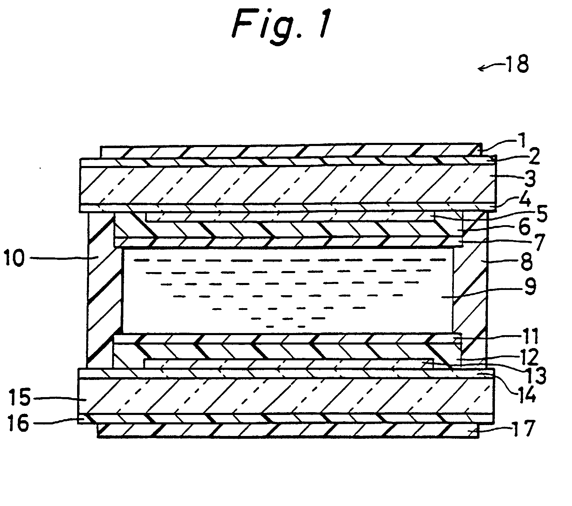

Fig. 1 is a sectional view showing the constitution of a plastic film liquid crystal display device in an embodiment of the invention.

### DETAILED DESCRIPTION OF THE PREFERRED EMBODIMENTS

Now referring to the drawing, preferred embodiments of the invention are described below.

Fig. 1 is a sectional view showing the constitution of a plastic film liquid crystal display device 18 in an embodiment of the invention. Referring to Fig. 1, substrates 3, 15 of the liquid crystal display device 18 are plastic film substrates formed of transparent thermosetting ADC resin monomer by means of polished glass die. The substrate thickness is 0.4 mm, and it has a sufficient flatness. The surface precision is ±50Å in scanning of step difference of 2 mm by using a surface step difference meter, or ±100Å in scanning of 2 cm, which is as precise as polished glass. Without optical anisotropy, the permeability is as high as 92% in the light of wavelength of 550 nm, and the heat
resistance is 180°C at maximum. It is also excellent in gas barrier performance, solvent resistance and dimensional stability. The hardness is harder than H of pencil hardness.

On the outer surface of the plastic film substrates 3, 15, epoxy resin is applied, for example, as protective hard coats 2, 16, by spinner coating in a film thickness of 3000 to 6000Å.

On the mutually confronting surface of the plastic film substrates 3, 15, SiOx is evaporated in a film thickness of 150 to 1000Å as under coats 4, 14, and further thereon ITO is formed by sputtering deposition in a film thickness of about 1500A as transparent conductive films 5, 13. The transparent conductive films 5, 13 are baked at high temperature of about 140°C, and possess the hardness similar to that of the ITO transparent conductive film on the glass substrate. Further thereon, top coats 6, 12 made of SiOx, TiOx or acrylic resin are formed by baking at high temperature of 150 to 170°C, and orientation films 7, 11 coated with polyimide in a thickness of about 500Å by spinning are formed, and baked at high temperature of about 150 to 170°C. Next, a liquid crystal material 9 is injected, and seal members 8, 10 made of thermosetting epoxy resin are heated to about 120 to 150°C to seal, and polarizer plates 1, 17 are laminated on the outer side surfaces, thereby forming the plastic film liquid crystal display device 18.

The invention may be embodied in other specific forms without departing from the scope of the appended claims.

## Claims

1. A plastic film liquid crystal display device having a liquid crystal layer (9) disposed between a pair of plastic film substrates (3,15), characterised in that the substrates (3,15) are made of transparent thermosetting allyl diglycol carbonate resin and have a maximum heat resistance of about 180°C.

2. A plastic film liquid crystal display device according to claim 1, wherein the plastic film substrates (3,15) have a plate thickness of 0.2 mm or more.

3. A method of manufacturing a plastic film liquid crystal display device comprising providing a liquid crystal layer (9) disposed between a pair of plastic film substrates (3,15), the method being characterised in that the substrates (3,15) are made of transparent thermosetting allyl diglycol carbonate resin and have a maximum heat resistance of about 180°C.

4. A method of manufacturing a plastic film liquid crystal display device according to claim 3, wherein the plastic film substrates (3,15) are formed by means of a die made of polished glass.

## Patentansprüche

1. Flüssigkristall-Anzeigevorrichtung mit Kunststofffilmen mit einer Flüssigkristallschicht (9), die zwischen einem Paar Kunststofffilm-Substrate (3, 15) angeordnet ist, **dadurch gekennzeichnet**, dass die Substrate (3, 15) aus transparentem, durch Wärme härtbarem Allyldiglycolcarbonat-Harz bestehen und eine maximale Wärmebeständigkeit von ungefähr 180°C aufweisen.

2. Flüssigkristall-Anzeigevorrichtung mit Kunststofffilmen gemäß Anspruch 1, bei der die Kunststofffilm-Substrate (3, 15) eine Plattendicke von 0,2 mm oder mehr aufweisen.

3. Verfahren zum Herstellen einer Flüssigkristall-Anzeigevorrichtung mit Kunststofffilmen, umfassend das Anbringen einer Flüssigkristallschicht (9), die zwischen einem Paar Kunststofffilm-Substraten (3, 15) angeordnet wird, **dadurch gekennzeichnet**, dass die Substrate (3, 15) aus transparentem, durch Wärme härtbarem Allyldiglycolcarbonat-Harz bestehen und eine maximale Wärmebeständigkeit von ungefähr 180°C aufweisen.

4. Verfahren zum Herstellen einer Flüssigkristall-Anzeigevorrichtung mit Kunststofffilmen nach Anspruch 3, bei dem die Kunststofffilm-Substrate (3, 15) mittels eines Formwerkzeugs aus poliertem Glas hergestellt werden.

## Revendications

1. Dispositif d'affichage à cristaux liquides et film de matière plastique ayant une couche de cristaux liquides (9) disposée entre deux substrats formés chacun d'un film de matière plastique (3, 15), caractérisé en ce que les substrats (3, 15) sont constitués d'une résine de carbonate d'allyl diglycol thermodurcissable transparente ayant une résistance maximale à la chaleur d'environ 180°C.

2. Dispositif d'affichage à cristaux liquides et film de matière plastique selon la revendication 1, dans lequel les substrats formés d'un film de matière plastique (3, 15) ont une épaisseur de 0,2 mm ou davantage.

3. Procédé de fabrication d'un dispositif d'affichage à cristaux liquides et film de matière plastique comprenant l'étape de mise en place d'une couche de cristaux liquides (9) entre deux substrats formés chacun d'un film de matière plastique (3, 15), le procédé étant caractérisé en ce que les substrats (3, 15) sont constitués d'une résine de carbonate d'allyl diglycol thermodurcissable transparent et ont une résistance maximale à la chaleur d'environ 180°C.

4. Procédé de fabrication d'un dispositif d'affichage à cristaux liquides et film de matière plastique selon la revendication 3, dans lequel les substrats formés chacun d'un film de matière plastique (3, 15) sont formés au moyen d'une filière constituée de verre poli.
